# FASCICULE DE BREVET EUROPEEN

(11) **EP 3 232 446 B1**
(45) Date de publication et mention de la délivrance du brevet: **07.05.2025**
(21) Numéro de dépôt: 17154308.5
(22) Date de dépôt: 02.02.2017
(51) Int. Cl.: H01B 3/56, H02B 13/055

(54) **PROCÉDÉ POUR AUGMENTER LA TENUE DIELECTRIQUE A L'INTERIEUR D'UN APPAREIL DE PROTECTION ELECTRIQUE**
VERFAHREN ZUR ERHÖHUNG DER DIELEKTRISCHEN FESTIGKEIT IM INNEREN EINES ELEKTRISCHEN SCHALTGERÄTS
METHOD FOR INCREASING THE DIELECTRIC WITHSTAND STRENGTH IN AN ELECTRICAL APPARATUS

(30) Priorité: 12.04.2016 FR 1653192
(43) Date de publication de la demande: 18.10.2017
(73) Titulaire: Schneider Electric Industries SAS, 92500 Rueil-Malmaison (FR)
(72) Inventeur: GENTILS, François, 38050 Grenoble (FR); MALADEN, Romain, 38050 Grenoble (FR); STEIN, Rainer, 38050 Grenoble (FR)
(74) Mandataire: Schneider Electric

(56) Documents cités:
- EP-B1- 2 904 617
- WO-A1-2012/080269
- WO-A1-2014/173776
- WO-A1-2016/005435
- WO-A1-2016/012054
- FR-A1- 2 980 631

## Description

### DOMAINE TECHNIQUE

La présente invention concerne un procédé pour augmenter la tenue diélectrique à l'intérieur de l'enceinte d'un appareil électrique, ce procédé consistant à placer à l'intérieur de ladite enceinte une matière diélectrique sous forme liquide ou solide, puis à amener cette matière à une température et/ou une pression permettant son évaporation totale ou partielle à l'intérieur de l'enceinte.

La présente invention concerne également un appareil électrique, en particulier un appareil de protection électrique moyenne ou haute tension, comportant une enceinte remplie d'une matière diélectrique à l'état solide ou liquide, ladite enceinte étant apte à être ouverte de manière à permettre l'introduction de ladite matière, puis à être fermée et mise à étanchéité de manière à permettre l'évaporation de cette matière, puis la contention des gaz en résultant à l'intérieur de ladite enceinte.

### ETAT DE LA TECHNIQUE ANTERIEURE

Il est de plus en plus courant dans le domaine des appareils électriques moyenne ou haute tension, tels les disjoncteurs moyenne tension, de chercher à améliorer les performances diélectriques de ces appareils destinés à être remplis avec de l'air ambiant, de l'air sec ou bien un gaz neutre.

Une solution connue consiste à remplacer l'air par des gaz à haute performance comme le SF6 ou le Fluoroketone (C5FK) par exemple. En effet, à pression équivalente, la rigidité diélectrique de l'air est entre 2,5 et 3 fois inférieure à celle du SF6. Ces gaz sont toujours introduits sous forme gazeuse.

Une autre solution consiste à augmenter significativement la pression de l'air ou du gaz neutre.

Une autre solution consiste à utiliser des liquides isolants sous forme d'huile.

Or, remplacer l'air par des gaz dits à haute performance génère des contraintes de conception importantes (nécessité d'utiliser des valves, manomètres, etc...) et induit des procédés industriels hautement complexes (utilisation de bouteilles de gaz, procédés pour faire le vide, etc...) qu'il est préférable d'éviter dans la mesure du possible.

En effet, l'utilisation du fluorokétone (C5FK) nécessite la mise en œuvre d'un procédé de remplissage complexe. Après la mise à étanchéité du réservoir, l'on procède à l'évacuation de son contenu, puis au remplissage du C5FK, puis à l'ajout d'un gaz neutre jusqu'à une pression donnée, ce qui nécessite un manomètre ainsi qu'une valve.

Ainsi, lors de la mise en œuvre de tels procédés, le remplissage de l'appareil par du gaz est réalisé après l'obtention du vide.

En outre de ce qui précède, l'on cherche de plus en plus à se détourner de l'utilisation du gaz SF6, compte tenu de l'impact supposé de ce gaz sur le phénomène de réchauffement climatique, son potentiel de réchauffement global (PRG) étant 22800 fois supérieur à celui du C02, ce qui en fait le gaz ayant le plus fort impact sur l'effet de serre.

Quant à la manipulation de fluorokétone à l'état liquide dans un procédé de remplissage ouvert, celui-ci est à éviter compte tenu des risques de déversement de liquide par les opérateurs dans l'usine et de la vaporisation de gaz dans les ateliers.

On connaît le document WO 2012/080269 A1 décrivant un procédé permettant de mélanger un gaz diélectrique avec un gaz porteur dans une enceinte d'un appareil électrique.

On connaît également le document FR2980631 A1 décrivant un procédé selon le préambule de la revendication 1.

On connaît également le document EP 2 904 617 A1 décrivant une enceinte d'un appareillage électrique remplie d'un gaz comprenant un composé organofluoré et pourvue d'un tamis moléculaire.

La présente invention résout ou atténue ces problèmes et propose un procédé permettant d'améliorer la tenue diélectrique à l'intérieur de l'enceinte d'un appareil électrique, ce procédé étant mis en œuvre aisément sans contraintes de mise en œuvre importantes et en limitant au maximum l'exposition des opérateurs aux vapeurs de gaz.

### EXPOSE DE L'INVENTION

A cet effet, l'invention propose un procédé selon la revendication 1.

Selon une caractéristique particulière, l'évaporation précitée est accélérée par le chauffage de la matière à une certaine température, cette température étant supérieure à la température ambiante ou bien comprise entre une température atteignable en milieu industriel et la température ambiante.

L'intérêt d'une température supérieure à la température ambiante réside principalement dans l'accélération du phénomène d'évaporation.

Selon une caractéristique particulière, l'enceinte précitée avant la mise en place du contenant, est remplie exclusivement ou non exclusivement d'air ambiant, d'air sec ou bien d'un gaz neutre.

Selon une autre réalisation, l'on fait le vide à l'intérieur de ladite enceinte, puis on la remplie exclusivement ou non exclusivement d'un gaz pure ou d'un mélange contenant du N2, du CO2, ou du O2 avant la mise en place du contenant ou bien après la mise en place du contenant ou bien après la mise en place du contenant.

### DESCRIPTION DE PLUSIEURS MODES DE REALISATION SELON L'INVENTION.

Mais d'autres avantages et caractéristiques de l'invention apparaîtront mieux dans la description détaillée qui suit et se réfère aux dessins annexés donnés uniquement à titre d'exemple et dans lesquels :
- Les figures 1 à 3 sont des représentations schématiques illustrant le procédé dans son principe, selon trois réalisations différentes représentées respectivement sur les figures 1a, 1b et 1c, seule la figure 1c correspond à l'invention.
- Les figures 4 à 7 illustrent les différentes étapes d'un procédé selon une réalisation particulière ne faisant pas partie de l'invention,
- Les figures 8,9 et 10 illustrent schématiquement respectivement trois autres réalisations du procédé non couvertes par l'invention, et
- Les Fig.8a, Fig.8b, Fig.8c, Fig.9a, Fig.9b et Fig.10a, Fig.10b correspondent respectivement aux différentes étapes de ces trois réalisations.

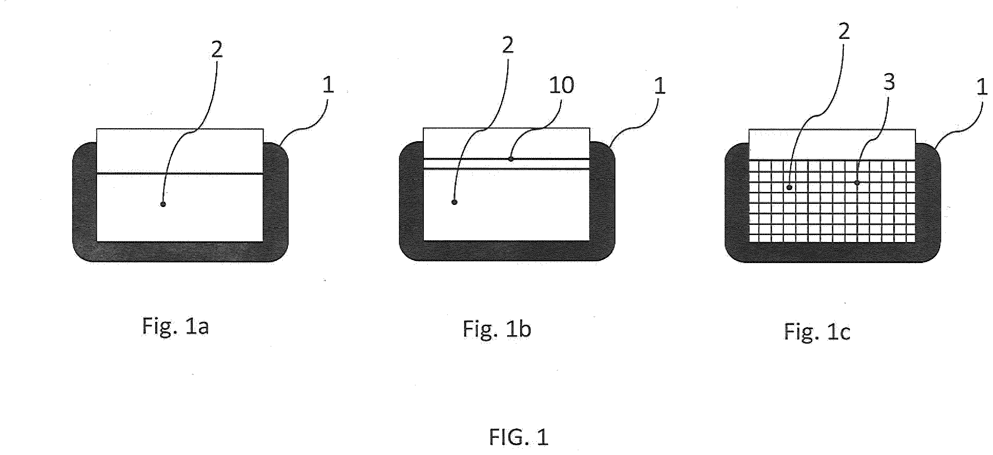

Sur les figures 1 à 3, est illustré un procédé selon l'invention permettant d'améliorer la tenue diélectrique à l'intérieur d'une enceinte E appartenant à un appareil électrique moyenne ou haute tension, tel un disjoncteur moyenne tension, cette enceinte étant, dans ce mode de réalisation particulier, préalablement rempli avec de l'air.

Une première étape de ce procédé consiste à se munir d'un contenant 1 ouvert de manière à permettre le remplissage d'une matière 2 diélectrique à l'état solide ou liquide, ce contenant pouvant être laissé ouvert, tel qu'illustré sur la fig.1a, pouvant être fermé et mis à étanchéité tel qu'illustré sur la figure 1b, ou bien, selon l'invention, être adapté à recevoir un substrat poreux telle une éponge 3, ledit substrat étant rempli d'un liquide diélectrique.

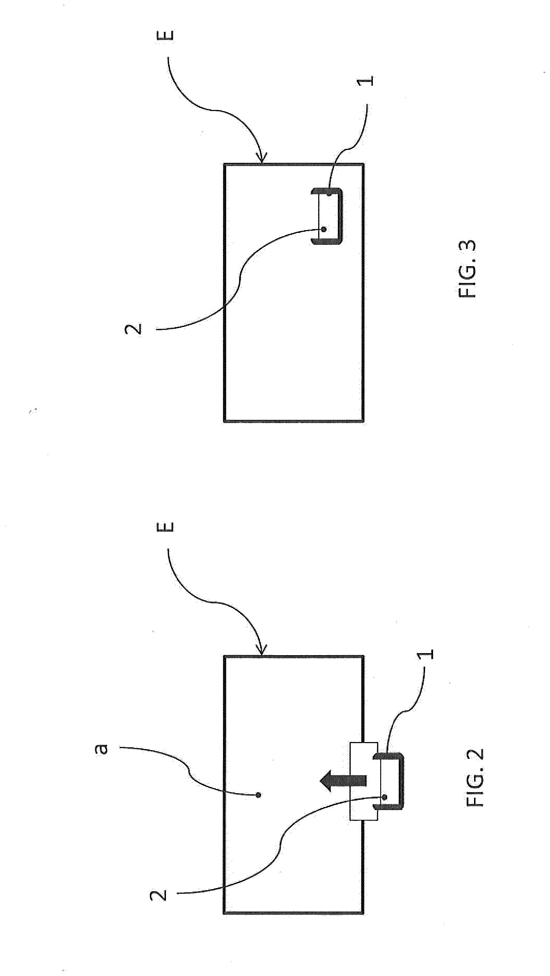

Une seconde étape de ce procédé illustrée sur la figure 2, consiste à introduire ce contenant 1 à l'intérieur de l'enceinte E de l'appareil à la température ambiante ou à une température inférieure à la température ambiante dans une pièce climatisée, ces températures étant inférieures à la température d'ébullition du liquide.

Selon une troisième étape décrite sur la figure 3, l'enceinte E est fermée et mise à étanchéité, et l'évaporation de liquide peut se produire, le chauffage de l'enceinte au-dessus de la température ambiante pouvant accélérer le phénomène d'évaporation.

Les vapeurs de gaz ainsi libérées lors de cette évaporation se mélangent avec l'air, ce qui augmente la performance diélectrique de l'appareil.

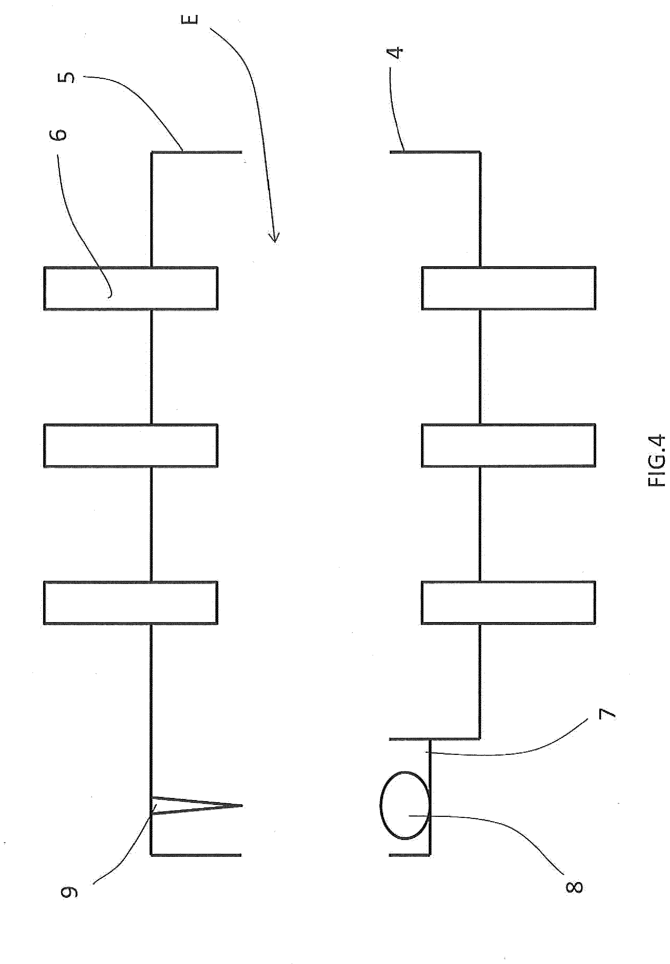

Selon une seconde réalisation non couverte par l'invention illustrée sur les figures 4 à 7, l'enceinte précitée E comporte une partie inférieure 4 et une partie supérieure 5, ces deux parties supportant chacune des conducteurs électriques 6.

Cette partie inférieure 4 comporte un logement 7 destiné à recevoir un sac 8, lequel sac est destiné à contenir un liquide diélectrique.

Sur la figure 4, l'enceinte E est en position ouverte ayant permis l'introduction du sac précité 8.

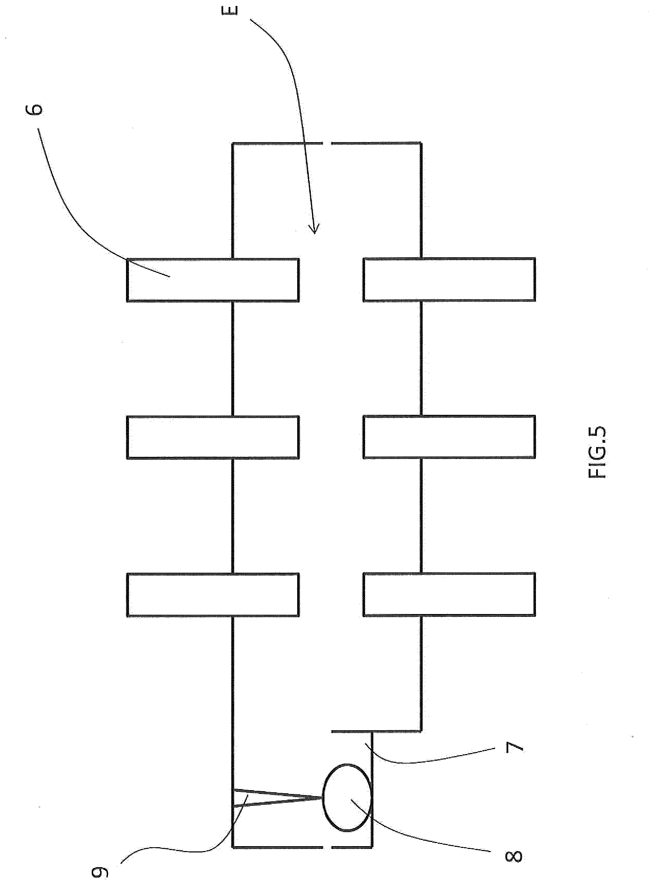

La partie supérieure 5 comporte une partie conformée en aiguille 9 apte à venir perforer le sac précité 8 lors de la fermeture de l'enceinte E, étape illustrée sur la figure 5.

Ainsi, cette perforation peut être réalisée soit lors de la fermeture de l'enceinte E, soit en prévoyant une forme spécifique sur la partie mobile 5 de l'enceinte E, cette forme spécifique étant apte à perforer le contenant 1 par l'actionnement d'une commande mécanique (non représentée) prévue dans l'enceinte.

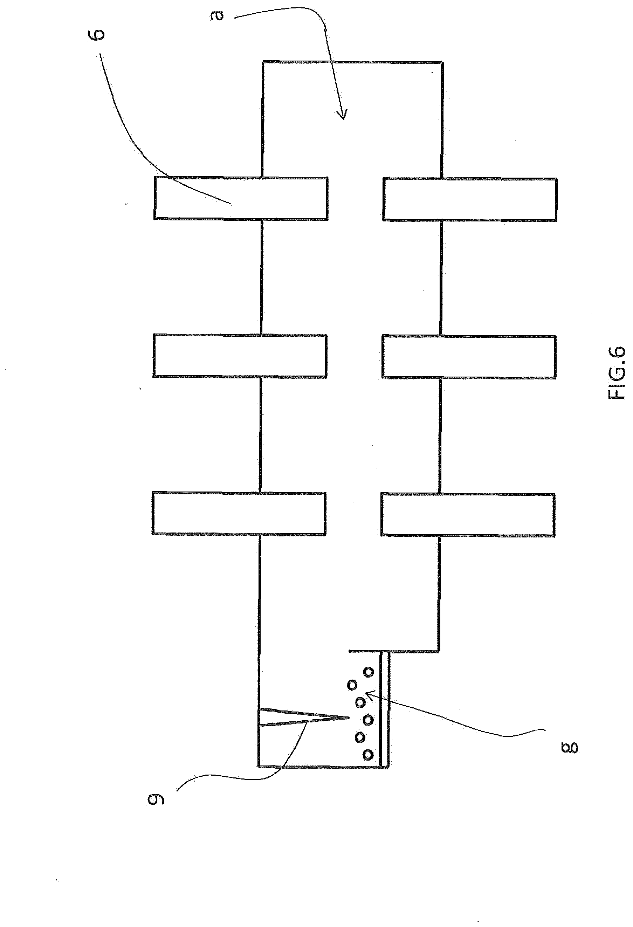

Sur la figure 6, l'enceinte E est fermée et permet la libération des vapeurs de gaz.

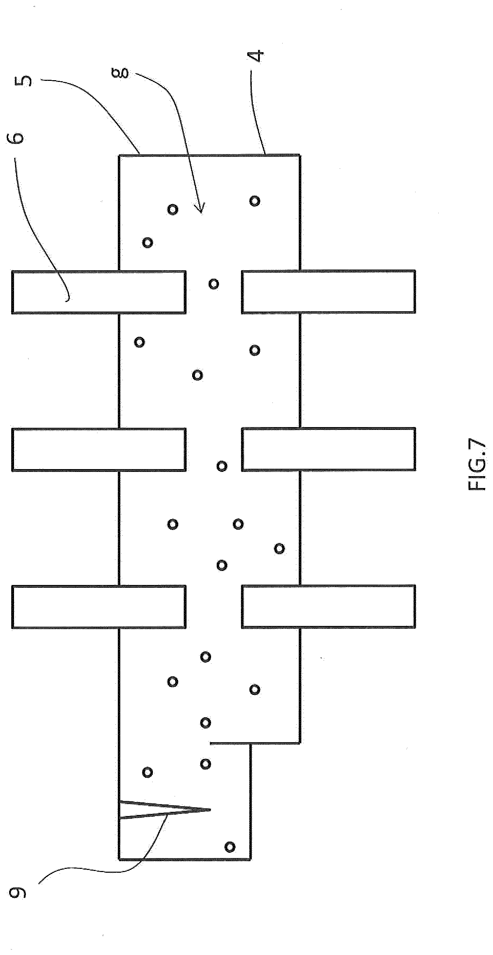

Sur la figure 7, après un certain temps, dépendant de la température, la matière diélectrique est totalement ou partiellement à l'état gazeux. L'appareil est prêt à être utilisé.

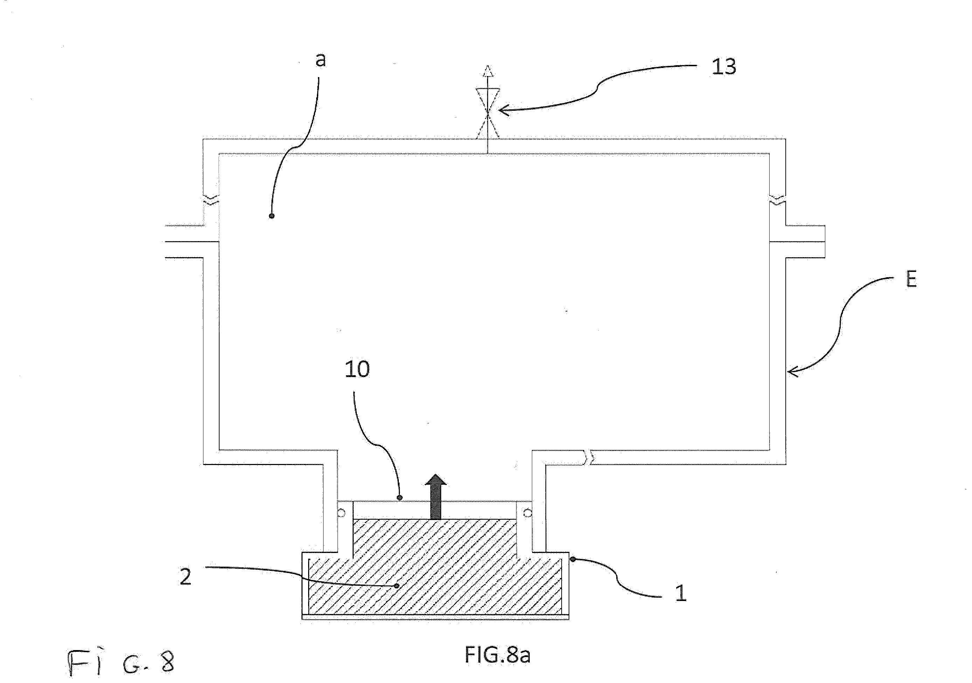

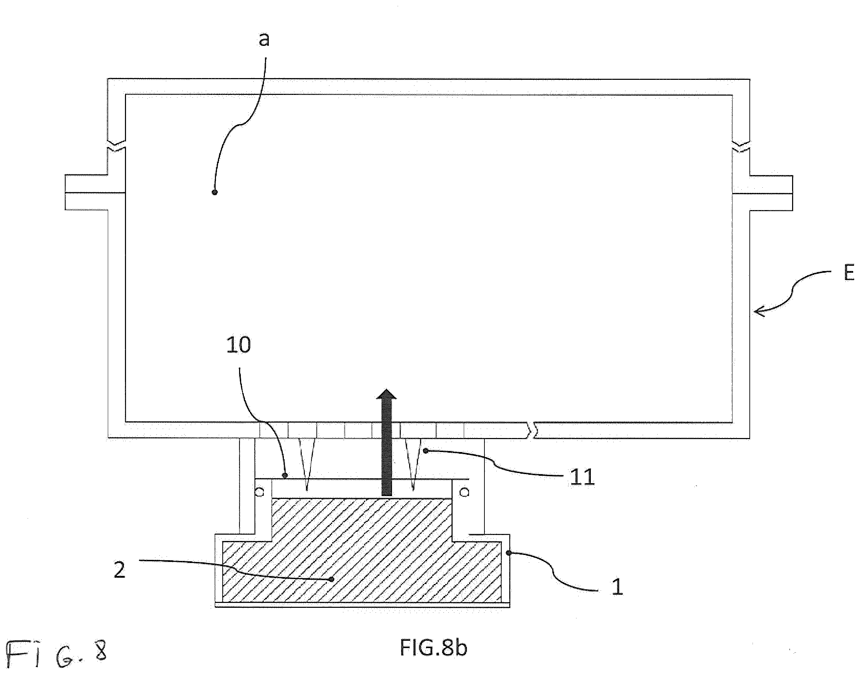

Les passages suivants du texte correspondant aux figures 8 à 10 représentent des exemples ne faisant pas partie de l'invention.

Selon un autre mode de réalisation illustré sur la figure 8, le contenant 1 et l'enceinte E sont reliés l'un à l'autre par une zone de connexion z, la communication entre les deux étant empêchée par le fait que le contenant 1 est fermé par une feuille 10 réalisée en un matériau tel l'aluminium, cette feuille étant apte à être perforée par l'actionnement d'un moyen mécanique prévu à cet effet dans l'enceinte E entraînant le déplacement des éléments formant aiguille 11, de manière à établir la communication entre l'enceinte et le contenant.

Ainsi, sur la figure 8a, la communication est empêchée par la présence de cette feuille 10. L'enceinte E comporte à sa partie supérieure une valve 13 destinée à l'évacuation de l'enceinte avant le remplissage avec du gaz N2 par exemple. Sur la figure 8b, la communication est en train de s'établir par performation de cette feuille 10.

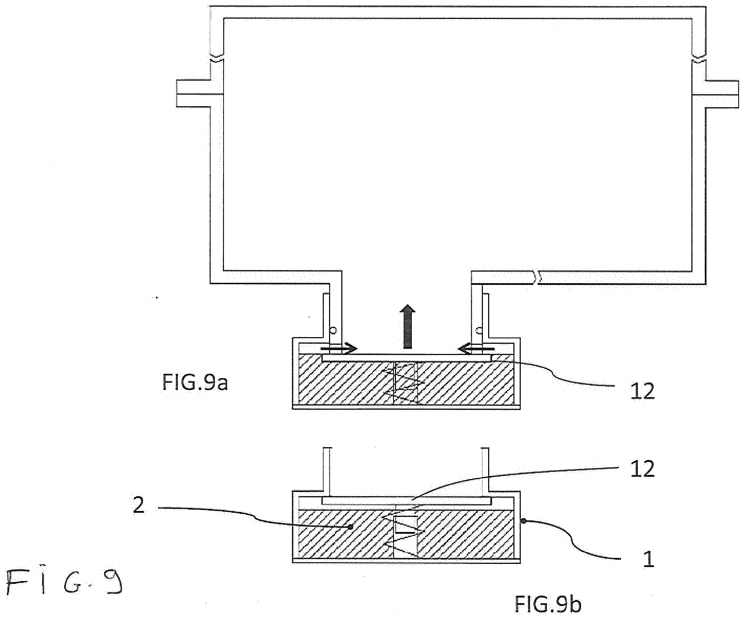

Sur la figure 9, la zone de connexion z comporte une valve 12 apte à établir la connexion entre le contenant 1 et l'enceinte E lorsque ces dernières sont réunies l'une avec l'autre.

Ainsi, sur la figure 9a, la valve 12 est à l'état ouvert, tandis que sur la figure 9b, la valve 12 est à l'état fermé.

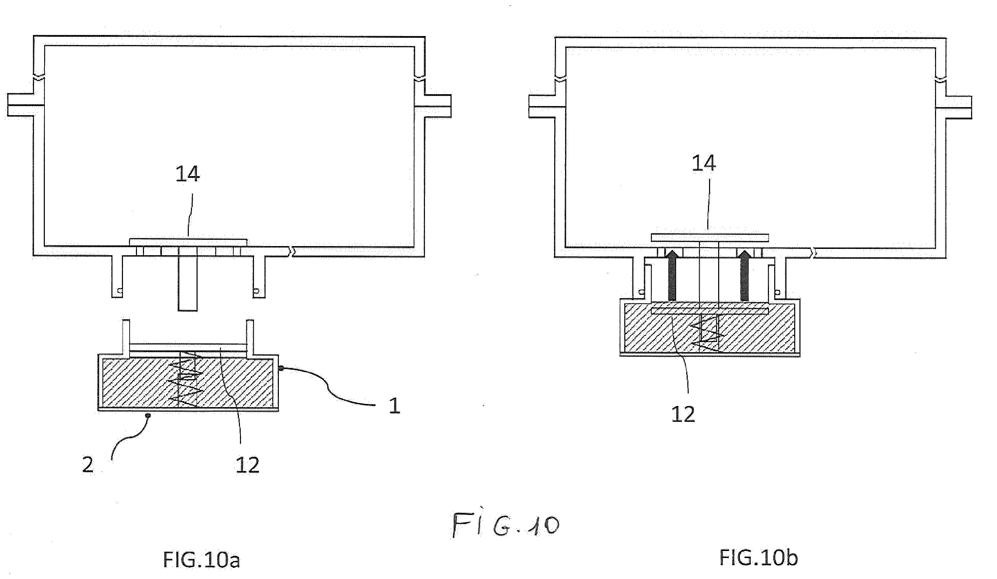

Sur la figure 10, la zone de connexion z comporte deux valves 12 et 14 aptes à établir la connexion entre le contenant 1 et l'enceinte E lorsque ces dernières sont réunies l'une avec l'autre.

Ainsi, sur la figure 10a, les valves 12 et 14 sont à l'état fermé, tandis que sur la figure 10b, les valves 12 et 14 sont à l'état ouvert après la connexion entre l'enceinte E et le contenant 1.

Dans toutes ces réalisations, l'utilisation d'un procédé de chauffage dans la cellule permet d'accélérer l'évaporation.

Ces vapeurs de gaz g mixées avec l'air présent dans l'enceinte E, présentent une rigidité diélectrique supérieure à celle de l'air pure, à la même pression.

Par exemple, 0.060 bars à 20°C de Fluoroketone C6FK apporte la même performance diélectrique qu'environ 0,300 bars de SF6.

Ainsi, il n'y a aucune nécessité de placer une quantité importante de Fluoroketon C6FK par exemple, pour améliorer significativement la tenue diélectrique d'un appareil moyenne ou haute tension.

Ainsi, cette matière diélectrique apportée étant liquide à la température ambiante (ayant par exemple comme température d'ébullition 49°C dans le cas du C6FK), elle peut être manipulée à l'état liquide et pas à l'état gazeux, ce qui est très utile d'un point de vue industriel. Avec une telle quantité et compte-tenu de la courbe de pression de vapeur saturante, il est possible de garantir à la fois que ce liquide sera évaporé totalement dans le réservoir dans lequel il sera placé à l'état liquide et que cette matière restera à l'état liquide à partir des températures les plus élevées d'utilisation jusqu'à 15°C. Bien sur, cette valeur basse pourra être ajustée en modifiant la pression partielle de cette matière ou en sélectionnant une autre matière.

Pour un volume de cellule de 30 litres, il est nécessaire d'apporter environ 15mL de liquide C6FK pour atteindre la pression précédemment mentionnée.

D'autres matières diélectriques peuvent être utilisées que celle décrite dans la description précitée, ces matières présentant de préférence les propriétés suivantes :
- un potentiel de réchauffement global (GWP) inférieur à 3000.
- une température d'ébullition inférieure à 60 °C.
- Une toxicité (TWA) supérieure à 50ppm.
- Une classification de la matière dans les produits non inflammables.

La liste ci-dessous énumère différentes familles possibles de matières chimiques, lesquelles pourraient être utilisées avantageusement :
- Les hydrofluoroethers (HFE).
- Les hydrofluoroolefins (HFO)
- Les Fluoroketones.

La mise en œuvre du procédé de l'invention selon la réalisation décrite précédemment dans lequel le substrat poreux est une éponge, qui est au sens large un substrat poreux, pourrait être le suivant :
Le fabricant de matière chimique (ou un sous-traitant spécialisé dans le conditionnement de produits chimiques) fournit une éponge contenant l'exacte quantité de liquide isolant pour un appareil donné. De manière à éviter toute vaporisation pendant le transport et le stockage, cette éponge est empaquetée dans un emballage étanche ou un sac.

Pendant la phase d'assemblage, les utilisateurs ouvrent ce sac et mettent l'éponge dans la cellule juste avant sa fermeture. Comme le point d'ébullition de ce fluide isolant est élevé, la vaporisation est très lente, ce qui laisse suffisamment de temps à l'utilisateur pour fermer l'enceinte. Avantageusement, le point d'ébullition pourrait être compris entre 0 et 60°C.

Selon une autre réalisation ne faisant pas partie de l'invention, le contenant est un emballage étanche ou un sac qui contient l'exacte quantité de liquide nécessaire pour remplir le réservoir. Pendant la phase d'assemblage, cet emballage étanche ou sac est disposé dans un endroit spécifique à l'intérieur du réservoir et, lorsque le couvercle pour fermer le réservoir est mis en place, un élément de ce couvercle perfore l'emballage étanche ou le sac, ce qui provoque la libération des vapeurs de liquide.

On a donc réalisé selon l'invention un procédé permettant d'augmenter la tenue diélectrique de l'air ou autre gaz neutre introduit dans l'enceinte (à l'état pressurisé ou à pression atmosphérique ou sous la pression atmosphérique) dans une enceinte étanche appartenant à un appareil électrique moyenne ou haute tension, en utilisant une cartouche additionnelle laquelle doit être placée dans la cellule avant la mise à étanchéité de l'enceinte.

Ce procédé de mise en œuvre est particulièrement simple et peu onéreux évitant toute manipulation complexe telle la mise sous vide, l'utilisation de valves et autres procédés d'injection et d'évacuation.

Grâce à ce dernier procédé (emballage étanche ou sac), l'utilisateur n'a plus aucun contact avec le liquide pendant l'assemblage ou lors d'une vaporisation incontrôlée. Il n'y a aucune contrainte de temps entre la mise du contenant dans l'enceinte, la mise à étanchéité de l'enceinte et l'ouverture du contenant.

L'invention propose donc une solution technique pour déposer la matière isolante facilement à l'intérieur de l'appareil.

Selon l'invention, lorsque le contenant est une éponge par exemple, l'utilisateur n'a pas à manipuler le liquide fluoré, ce qui nécessitait auparavant de la précision, de prendre des précautions, une gestion et un stockage des bouteilles. L'utilisateur a juste besoin de manipuler les éponges en utilisant des gants, la manipulation des éponges étant plus aisée que la manipulation d'un liquide.

La solution, non couverte par l'invention, consistant à utiliser un contenant apte à être perforé est la plus sure du point de vue de la sécurité de l'utilisateur, car ce dernier n'est jamais en contact avec le fluide et ses vapeurs.

L'invention s'applique avantageusement à tout appareil électrique comportant une enceinte comportant une fonction diélectrique.

L'invention s'applique particulièrement à tout appareil de protection électrique moyenne tension tel un disjoncteur, un interrupteur, un jeu de barres, etc.

## Revendications

1. Procédé pour augmenter la tenue diélectrique d'air ambiant, d'air sec ou d'un gaz neutre présent à l'intérieur de l'enceinte d'un appareil électrique, ce procédé consistant à placer à l'intérieur de ladite enceinte une matière diélectrique, cette matière diélectrique étant placée à l'intérieur de ladite enceinte sous forme liquide, puis est amenée à une température et/ou une pression permettant son évaporation totale ou partielle à l'intérieur de l'enceinte, **caractérisé en ce que** ladite matière (2) est retenue à l'intérieur de son contenant (1) pendant la manipulation permettant la mise en place dudit contenant (1) dans l'enceinte E, grâce à des moyens comportant un substrat (3) absorbant rempli du liquide diélectrique, et un emballage étanche apte à transporter ledit substrat et duquel ledit substrat peut être retiré avant d'être placé dans l'enceinte juste avant la fermeture de ladite enceinte,
puis l'on provoque l'évaporation de cette matière (2) à un certain moment après cette mise en place dans l'enceinte E pour autoriser la dispersion des gaz g résultant de cette évaporation à l'intérieur de l'enceinte E.

2. Procédé selon la revendication 1, **caractérisé en ce que** l'évaporation précitée est accélérée par le chauffage de la matière (2) à une certaine température, cette température étant supérieure à la température ambiante ou bien comprise entre une température T0 atteignable en milieu industriel et la température ambiante.

3. Procédé selon la revendication 1 ou 2, **caractérisé en ce que** l'enceinte précitée E avant la mise en place du contenant (1), est remplie au moins en partie d'air ambiant (a), d'air sec ou bien d'un gaz neutre.

4. Procédé selon l'une quelconque des revendications 1 ou 2, **caractérisé en ce que** l'on fait le vide à l'intérieur de ladite enceinte E, puis on la remplie au moins en partie d'un gaz pure ou d'un mélange contenant du N2, du CO2, ou du O2 avant la mise en place du contenant ou bien après la mise en place du contenant.

## Patentansprüche

1. Verfahren zur Erhöhung der dielektrischen Festigkeit von Umgebungsluft, von trockener Luft oder von einem neutralen Gas, die bzw. das sich im Inneren der Kammer eines Schaltgeräts befindet, wobei dieses Verfahren darin besteht, im Inneren der Kammer ein dielektrisches Material zu platzieren, wobei dieses dielektrische Material im Inneren der Kammer in flüssiger Form platziert wird, dann auf eine Temperatur und/oder einen Druck gebracht wird, die bzw. der sein vollständiges oder teilweises Verdampfen im Inneren der Kammer ermöglicht, **dadurch gekennzeichnet, dass** das Material (2) im Inneren seines Behälters (1) während der Handhabung, die das Einsetzen des Behälters (1) in die Kammer E ermöglicht, dank von Mitteln zurückgehalten wird, die ein mit der dielektrischen Flüssigkeit gefülltes absorbierendes Substrat (3) umfassen, und einer dichten Verpackung, die geeignet ist, das Substrat zu transportieren, und aus der das Substrat entnommen werden kann, bevor es unmittelbar vor dem Schließen der Kammer in der Kammer platziert wird,
dann das Verdampfen dieses Materials (2) zu einem gewissen Zeitpunkt nach diesem Einsetzen in die Kammer E bewirkt wird, um die Dispersion der aus diesem Verdampfen resultierenden Gase g im Inneren der Kammer E zuzulassen.

2. Verfahren nach Anspruch 1, **dadurch gekennzeichnet, dass** das vorgenannte Verdampfen durch das Erhitzen des Materials (2) auf eine bestimmte Temperatur beschleunigt wird, wobei diese Temperatur höher als die Umgebungstemperatur ist oder aber zwischen einer im industriellen Milieu erreichbaren Temperatur T0 und der Umgebungstemperatur liegt.

3. Verfahren nach Anspruch 1 oder 2, **dadurch gekennzeichnet, dass** die vorgenannte Kammer E vor dem Einsetzen des Behälters (1) mindestens teilweise mit Umgebungsluft (a), trockener Luft oder aber einem neutralen Gas gefüllt wird.

4. Verfahren nach einem der Ansprüche 1 oder 2, **dadurch gekennzeichnet, dass** man das Innere der Kammer E evakuiert, man sie dann mindestens teilweise mit einem reinen Gas oder mit einem Gemisch, das N2, CO2 oder O2 enthält, vor dem Einsetzen des Behälters oder aber nach dem Einsetzen des Behälters füllt.

## Claims

1. Method for increasing the dielectric strength of ambient air, dry air or a neutral gas present inside the enclosure of an electrical unit, this method consisting in placing a dielectric material inside said enclosure, this dielectric material being placed inside said enclosure in liquid form, then being brought to a temperature and/or a pressure allowing the total or partial evaporation thereof inside the enclosure, **characterized in that** said material (2) is retained inside its container (1) during the handling allowing said container (1) to be put in place in the enclosure **E,** by virtue of means comprising an absorbent substrate (3) filled with the dielectric liquid and a sealed packaging that is able to transport said substrate and from which said substrate can be removed before being placed in the enclosure just before said enclosure is closed,
then the evaporation of this material (2) is caused at a certain moment after this putting in place in the enclosure E so as to allow the dispersion of the gases g resulting from this evaporation inside the enclosure E.

2. Method according to Claim 1, **characterized in that** the abovementioned evaporation is accelerated by the heating of the material (2) to a certain temperature, this temperature being higher than the ambient temperature or else between a temperature T0 that can be reached in an industrial environment and the ambient temperature.

3. Method according to Claim 1 or 2, **characterized in that** the abovementioned enclosure E, before the container (1) is put in place, is filled at least partly with ambient air (a), dry air or else a neutral gas.

4. Method according to either one of Claims 1 and 2, **characterized in that** a vacuum is created inside said enclosure E, then it is filled at least partly with a pure gas or a mixture containing N2, CO2, or O2 before the container is put in place or else after the container is put in place.
